# EUROPÄISCHE PATENTSCHRIFT

(11) **EP 2 820 317 B1**
(45) Veröffentlichungstag und Bekanntmachung des Hinweises auf die Patenterteilung: **03.04.2019**
(21) Anmeldenummer: 13708391.1
(22) Anmeldetag: 27.02.2013
(51) Int. Cl.: F16C 33/54, B05D 1/24, F16C 33/56, F16C 33/46

(54) **VERFAHREN ZUR HERSTELLUNG EINES WÄLZLAGERKÄFIGS FÜR EIN AXIAL-RADIAL-WÄLZLAGER SOWIE AXIAL-RADIAL-WÄLZLAGER**
METHOD FOR PRODUCING A ROLLING BEARING CAGE FOR AN AXIAL-RADIAL ROLLING BEARING AND AXIAL-RADIAL ROLLING BEARING
PROCÉDÉ DE FABRICATION D'UNE CAGE DE PALIER À ROULEMENT POUR UN PALIER À ROULEMENT AXIAL-RADIAL AINSI QUE PALIER À ROULEMENT AXIAL-RADIAL

(30) Priorität: 29.02.2012 DE 102012101651
(43) Veröffentlichungstag der Anmeldung: 07.01.2015
(73) Patentinhaber: thyssenkrupp Rothe Erde GmbH, 44137 Dortmund (DE)
(72) Erfinder: CLAUS, Wolfgang, 59510 Lippetal (DE); JÜRGENS, Reinhard, 59555 Lippstadt (DE); SCHNIEDER, Stefan, 59558 Lippstadt (DE); ROLLMANN, Jörg, 59558 Lippstadt (DE)
(74) Vertreter: Loock, Jan Pieter
(86) Internationale Anmeldenummer: PCT/EP2013/053948
(87) Internationale Veröffentlichungsnummer: WO 2013/127865

(56) Entgegenhaltungen:
- DE-A1- 1 577 915
- DE-A1- 1 915 330
- DE-A1- 19 731 892
- DE-A1- 19 751 003
- DE-A1-102008 053 248
- DE-B- 1 079 901
- DE-U1-202004 007 831
- FR-A- 1 188 894
- GB-A- 2 062 128
- JP-A- 2009 115 318
- US-A- 1 224 346

## Beschreibung

Die Erfindung betrifft ein Verfahren zur Herstellung eines Wälzlagerkäfigs für Wälzlager, welches zumindest eine Reihe von Wälzkörpern aufweist. Ein Wälzlager, mit einem Innenring, einem Außenring und der zumindest einen Reihe der Wälzkörpern dazwischen kann mit zumindest einem derartigen Wälzlagerkäfig ausgerüstet sein.

Der Wälzlagerkäfig ist dazu vorgesehen, die Wälzkörper in Form von Rollen, also insbesondere Kegel- oder Zylinderrollen, auf einem gleichbleibenden Abstand zueinander zu halten. Entsprechende Käfige können gemäß dem Stand der Technik als offener oder geschlossener Ring oder aus einer Vielzahl von Segmenten gebildet sein.

Aus der Praxis ist es bekannt, geringe Käfigkräfte bei kleinen Wälzlagern durch Kunststoffkäfige weitgehend verschleißfrei aufzunehmen. Bei großen Wälzlagern ist der Einsatz von gespritzten Kunststoffkäfigen zum einen aufgrund der hohen Kosten für entsprechende Spritzgussformen nachteilig, insbesondere weil Großwälzlager üblicherweise auch in vergleichsweise kleinen Stückzahlen gefertigt werden. Darüber hinaus weisen Kunststoffkäfige für Großwälzlager in vielen Fällen keine ausreichende Festigkeit auf. Darüber ist zu berücksichtigen, dass insbesondere bei Kegelrollenlagern auch die Käfige die Form eines Kegelmantelabschnitts aufweisen müssen und so zumindest nicht ohne Weiteres aus einem flachen Material gefertigt werden können.

Im Rahmen der vorliegenden Erfindung soll der Wälzlagerkäfig insbesondere für Großwälzlager geeignet sein, so dass der Durchmesser des Käfigs dann zumindest einen Meter beträgt. Gerade bei dieser Größe sind Käfige aus einfachen Kunststoffstreifen zwar kostengünstig zu fertigen, weisen aber in Umfangsrichtung nur eine sehr geringe Festigkeit auf und sind deshalb für viele Anwendungen nicht geeignet. Dabei ist auch zu berücksichtigen, dass gerade bei Großwälzlagern ein nachträglicher Austausch des Lagers zum Teil mit sehr hohen Kosten und einem sehr großen Aufwand verbunden ist. Hohe Käfigkräfte können durch Käfige aus Stahl aufgenommen werden, wobei Stahl, insbesondere bei einer schlechten Schmierung, verschleißempfindlich ist. Zusätzliche Maßnahmen wie Nitrieren oder eine Nitrocarburierung sind genau wie der Einsatz eines hochwertigen Metalls mit geringer Verschleißwirkung wie Bronze kostenintensiv.

Aus der DE 30 41 355 A1 ist ein Käfig für ein herkömmliches Kugellager mit einem inneren Laufring, einem äußeren Laufring und mehreren dazwischen angeordneten Kugeln bekannt, wobei der Käfig aus zwei Blechteilen gebildet ist, die jeweils einen Überzug aus Kunststoff aufweisen. Die Herstellung eines solchen aus zwei umgeformten und beschichteten Blechstreifen gebildeten Käfigs ist aufwendig und nicht für Großwälzlager geeignet. Da die Beschichtung in einem elektrostatischen Verfahren oder einem Strömungsbettverfahren zunächst auf die Stanzteile aufgebracht wird, verbleiben nach der Verbindung der Stanzteile Übergänge, an denen eine erhöhte Gefahr der Beschädigung bestehen kann. Als Beschichtung ist ein thermoplastischer Kunststoff, insbesondere Polyamid, vorgesehen, um die Kontaktflächen des Käfigs mit den Kugeln und dem inneren bzw. dem äußeren Laufring vor Verschleiß zu schützen und den Reibwert zu verringern. Die DE 30 41 355 A1 offenbart ein Verfahren gemäß dem Oberbegriff des Anspruchs 1.

Aus der DE 197 51 003 A1 sind ein Verfahren sowie eine Vorrichtung zum Beschichten von Werkstücken mit einem pulvrigen, granulösen, flüssigen oder pastösem Beschichtungsmedium bekannt, wobei das Aufbringen des Beschichtungsmediums in einem Wirbelbett erfolgt. Überschüssiges Beschichtungsmedium wird noch vor dem endgültigen Anschmelzen und Anhaften an dem Werkstück entfernt. Es ist deshalb eine aufwendige Verfahrensführung notwendig. Das beschriebene Verfahren und die beschriebene Vorrichtung sind insbesondere für Endlos-Werkstücke vorgesehen, die dann nachträglich in ihre endgültige Form gebracht werden.

Aus der WO 2011/003391 A1 ist ein Käfig für ein Wälzlager bekannt, der einstückig aus einem Vollmaterial gefertigt werden kann. Der Käfig weist Umformbereiche auf, um die Wälzkörper zunächst in den Käfig einlegen zu können und dann nach einem Umformen der Umformbereiche fixieren zu können. Eine Beschichtung des Käfigs ist nicht beschrieben und auch nicht möglich, weil diese durch das Umformen der Umformbereiche zerstört würde.

Auch eine nachträgliche Beschichtung ist aufgrund der dann innerhalb des Käfigs beweglich angeordneten Wälzkörper nicht mehr möglich.

Weiterhin ist aus der JP 2009 115318 A ein Wälzlager mit einer Kunststoffbeschichtung bekannt, wobei die Kunststoffbeschichtung in einem Wirbelbett aufgebracht wird.

Die DE 197 31 892 A1 beschreibt allgemein die Beschichtung eines elektrisch leitfähigen Werkstücks mit einem Wirbelbett.

Der vorliegenden Erfindung liegt die Aufgabe zugrunde, ein Verfahren zur Herstellung eines Wälzlagerkäfigs anzugeben, mit dem insbesondere auch für Großwälzlager auf einfache Weise ein ausreichend fester aber auch verschleißresistenter Wälzlagerkäfig bereitgestellt werden kann. Des Weiteren soll ein Wälzlager angegeben werden, dessen Wälzlagerkäfig sowohl kostengünstig herzustellen als auch stabil und widerstandsfähig ist.

Zur Lösung dieser Aufgabe ist erfindungsgemäß ein Verfahren zur Herstellung eines Wälzlagerkäfigs für ein Wälzlager gemäß Patentanspruch 1 vorgesehen. Das Wälzlager weist zumindest eine Reihe von Wälzkörpern auf. Im Rahmen des Verfahrens wird bzw. werden ein Ring oder ein Ringsegment aus einem metallischen Vollmaterial, insbesondere Stahl oder Aluminium, bereitgestellt. Aus dem Ring bzw. den Ringsegmenten wird durch einen Umformprozess und/oder einen schneidenden, materialabtragenden Prozess ein ringförmiger bzw. ein segmentierter Grundkörper des Wälzlagerkäfigs gebildet, der Öffnungen zur Aufnahme jeweils eines Wälzkörpers aufweist.

Der Umformprozess bzw. der schneidende, materialabtragende Prozess sind nicht nur dazu vorgesehen, um die Öffnungen zu bilden, sondern auch um die weitere Form des Grundkörpers festzulegen. So können beispielsweise für den Kontakt mit dem Innenring oder dem Außenring geeignete schräge Anlageflächen geformt werden. Darüber hinaus können bei der Ausformung des Grundkörpers an dem Wälzlagerkäfig auch integrierte Kammern wie Fettnuten gebildet werden, in denen in Bereichen der Kontaktflächen Schmierstoff aufgenommen werden kann. Auch weitere Einrichtungen wie Bohrungen zum Halten des Grundkörpers während einer nachfolgenden Beschichtung können erzeugt werden.

Als schneidende, materialabtragende Prozesse kommen insbesondere Fräsen, Drehen und Bohren in Frage, welche auch in Kombination angewendet werden können. Ein Schneiden von einer Struktur ist des Weiteren durch ein thermisches Schneiden, beispielsweise mittels Laser möglich.

Nachfolgend wird der Grundkörper zum thermischen Beschichten mit einem thermoplastischen Kunststoffpulver und einer Temperatur oberhalb einer minimalen Beschichtungstemperatur erwärmt, wobei der Grundkörper dann in einem Wirbelbett mit dem thermoplastischen Kunststoffpulver getaucht wird. Während des Verweilens des Grundkörpers in dem Wirbelbett haftet das Kunststoffpulver an dem Grundkörper an und schmilzt auf, wodurch sich eine durchgehende Beschichtung bildet. Schließlich wird der Grundkörper nach der Beschichtung aus dem Wirbelbett entnommen.

Erfindungsgemäß wird zunächst der Grundkörper in seiner Endform gefertigt, bevor dann eine Beschichtung erfolgt. Nach der Entnahme des Grundkörpers aus dem Wirbelbett ist keine weitere Erwärmung, Umformung oder dergleichen notwendig, so dass über den gesamten Ring eine sehr gleichmäßige und an allen Stellen gut anhaftende Beschichtung erzeugt wird.

Da der den Grundkörper bildende Ring bzw. die den Grundkörper bildenden Ringsegmente aus einem Vollmaterial geformt werden, sind auch sehr stabile Ausgestaltungen möglich, welche den Anforderungen an ein Großwälzlager auch bei einer starken Belastung gerecht werden können.
Da im Rahmen der Erfindung der Grundkörper zur Bildung des Wälzlagerkäfigs mit einer gleichmäßigen Beschichtung versehen wird, müssen die Öffnungen des Grundkörpers zur Aufnahme von Rollen ein Übermaß aufweisen. Diese Übermaß ist so bemessen, dass die Wälzkörper auch unter Berücksichtigung der Beschichtung klemmfrei aber auch mit möglichst wenig Spiel aufgenommen werden können.

Das Wälzlager ist vorzugsweise als Axial-Radial-Wälzlager mit zumindest zwei Reihen von Wälzkörpern derart ausgebildet, dass ein Innenring und ein Außenring radial und unabhängig von der Richtung von Achsschubkräften axial gegeneinander abgestützt sind. Damit ist gemeint, dass sämtliche axiale Kräfte unabhängig von ihrer Richtung (parallel oder antiparallel) übertragen werden können.

Bei dem Axial-Radial-Wälzlager kann es sich insbesondere um ein zweireihiges Kegelrollenlager mit entgegengesetzt schräg gestellten Reihen von Kegelrollen oder auch um eine dreireihige Rollendrehverbindung handeln. Bei einer solchen Rollendrehverbindung sind drei Reihen von Zylinderrollen als Wälzkörper vorgesehen, von denen eine erste und eine dritte Reihe eine axiale Abstützung und eine zweite Reihe eine radiale Abstützung bewirken. Üblicherweise ist die zweite Reihe zwischen der ersten Reihe und der dritten Reihe angeordnet.

Je nach Ausgestaltung des Axial-Radial-Wälzlagers als dreireihige Rollendrehverbindung oder zweireihigem Kegelrollenlager werden entweder Zylinderrollen oder Kegelrollen eingesetzt. Die fensterartigen Öffnungen weisen entsprechend eine rechteckige bzw. trapezförmige Grundfläche zur Aufnahme der Rollen auf. Obwohl die in dem Wirbelbett aufgebrachte Beschichtung an ebenen Abschnitten des Grundkörpers sehr gleichmäßig ist, können sich in Ecken, insbesondere in den Ecken der Öffnungen bei einer rechteckigen oder trapezförmigen Grundfläche, Materialanhäufungen bilden, die entweder zu einem Klemmen mit den Rollen oder außerhalb dieser Ecken zu einem erheblichen Spiel führen können. Gemäß einer bevorzugten Weiterbildung des erfindungsgemäßen Verfahrens ist deshalb bei einem Grundkörper mit fensterartigen Öffnungen vorgesehen, dass ausgehend von einer rechteckigen oder trapezförmigen Grundfläche in den Ecken der Öffnungen über die jeweilige Grundfläche hinausgehende Aussparungen erzeugt werden. In den Ecken können beispielsweise zusätzliche Einschnitte oder Bohrungen gebildet werden, wobei sich bei der Erzeugung einer Bohrung die Form von Kreissegmenten ergibt.

Der aus einem Ring oder aus Ringsegmenten gebildete Grundkörper kann vorzugsweise in einem Ofen erwärmt werden. Dabei ist zu berücksichtigen, dass aufgrund der Bereitstellung eines Vollmaterials insgesamt ein vergleichsweise großer Wärmeeintrag notwendig ist.

Je nach Ausgestaltung des Grundkörpers aus einem Ring oder aus Ringsegmenten kommt jedoch auch eine induktive Erwärmung durch ein elektromagnetisches Wechselfeld einer Induktionsspule in Betracht. Bei einem durchgehenden Ring ergibt sich der Vorteil, dass auch eine solche große, zusammenhängende Struktur erwärmt werden kann. Bei einem Grundkörper in Form eines Ringes ist vorzugweise auch die Induktionsspule ringförmig ausgebildet und konzentrisch mit dem Ring angeordnet. Bei einer konzentrischen Anordnung der Induktionsspule innerhalb oder außerhalb des Rings ergeben sich ein gleichmäßiger Spalt und damit eine besonders gleichmäßige Erwärmung.

Um aus Gründen der Energieeffizienz Temperaturverluste während oder nach der Erwärmung möglichst gering zu halten, wird eine Pause zwischen dem Erwärmen des Rings und dem Eintauchen in das Wirbelbett vorgesehen, die zur Vergleichmäßigung der Temperatur dient.

Die Auswahl der Temperatur ist im Rahmen der Erfindung von besonderer Bedeutung, weil bei einer zu niedrigen Temperatur das in dem Wirbelbett an dem Grundkörper anhaftende Pulver nur zu einem unzureichenden Maße aufgeschmolzen werden kann. Bei einer zu hohen Temperatur besteht dagegen die Gefahr, dass der Kunststoff zu dünnflüssig wird und sich aufgrund der Schwerkraft eine ungleichmäßige Verteilung der Beschichtung ergibt. Schließlich muss die Temperatur anhand des als Beschichtung vorgesehenen thermoplastischen Kunststoffs ausgewählt werden, wobei auch eine gewisse Abkühlung während des Beschichtungsprozesses innerhalb des Wirbelbettes Berücksichtigung finden muss.

Im Rahmen der Erfindung wird der Grundkörper durch einen Umformprozess und/oder einen schneidenden, materialabtragenden Prozess gebildet. Dabei ist zu berücksichtigen, dass durch eine solche Bearbeitung Verschmutzungen auf dem Grundkörper verbleiben können. Des Weiteren kann eine für das Bearbeitungsverfahren spezifische Oberflächenstruktur mit Rillen, Riefen oder Ungleichmäßigkeiten vorliegen, welche unter Umständen die nachfolgende Beschichtung mit Kunststoff beeinträchtigt. Vor diesem Hintergrund ist gemäß einem weiteren Verfahrensschritt nach dem Umform- bzw. Bearbeitungsprozess eine Reinigung oder eine andere Oberflächenbearbeitung vorgesehen. Besonders vorteilhaft ist die Vergütung der Oberfläche durch einen Partikelstrahl, beispielweise eine Bearbeitung durch Sandstrahlen oder ein Strahlen mit Korund. Im Rahmen einer solchen Bearbeitung können Verschmutzungen sowie oberflächliche Materialfehler beseitigt werden. Darüber hinaus wird an der Oberfläche eine Mikrostruktur erzeugt, die im besonderen Maße für die Aufnahme einer Beschichtung geeignet ist. Schließlich kann durch ein Strahlen der Oberfläche auch die Festigkeit und Widerstandsfähigkeit weiter verbessert werden.

Um die Haftung der Beschichtung auf dem Grundkörper zu verbessern, wird der Grundkörper vor der eigentlichen Beschichtung mit einer Haftvermittlerschicht als Grundierung versehen. Geeignet sind insbesondere Haftvermittler auf der Basis organischer Lösungsmittel und synthetischer Polymere, die bevorzugt bereits vor der Erwärmung aufgebracht werden.

Die Erfindung wird im Folgenden anhand einer lediglich ein Ausführungsbeispiel darstellenden Zeichnung erläutert. Es zeigen:
- **Fig. 1**: einen Schnitt durch ein Axial-Radial-Wälzlager mit zwei Reihen von Kegelrollen,
- **Fig. 2**: einen in Fig. 1 dargestellten Wälzlagerkäfig in einer perspektivischen Teilansicht,
- **Fig. 3**: der Wälzlagerkäfig gemäß der Fig. 2 in einer vergrößerten Schnittdarstellung.

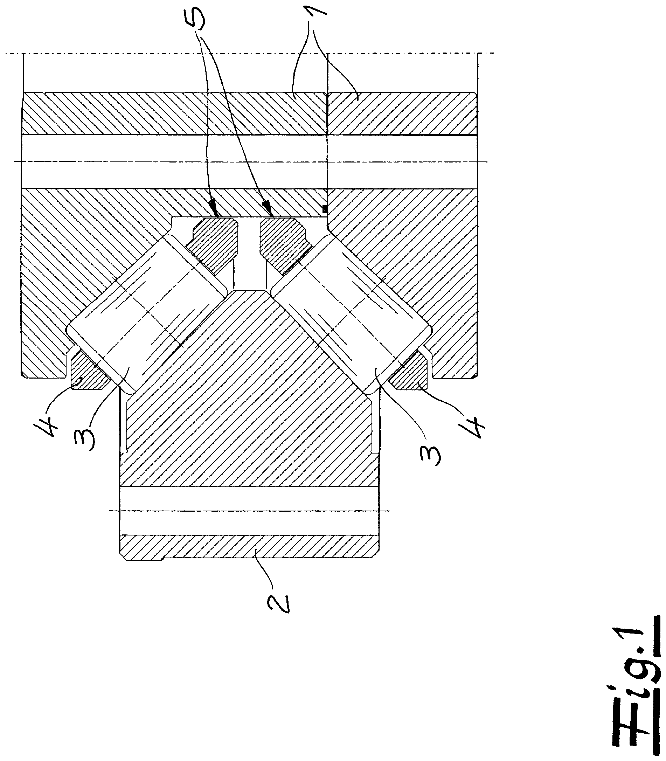

Die Fig. 1 zeigt einen Schnitt durch eine Seite eines Axial-Radial-Großwälzlagers, wobei das Axial-Radial-Großwälzlager einen Innenring 1, einen Außenring 2 und dazwischen zwei Reihen von Wälzkörpern 3 aufweist. Die beiden Reihen von Wälzkörpern 3 sind in axialer Richtung gegenüberliegend angeordnet, so dass der Innenring sowohl radial als auch unabhängig von der Richtung von Achsschubkräften axial gegen den Außenring 2 abgestützt ist.

Der Schnittdarstellung der Fig. 1 ist zu entnehmen, dass die Wälzkörper 3 in Form von Kegelrollen für jede der beiden Reihen durch einen Wälzlagerkäfig 4 auf einem Abstand zueinander gehalten sind. Darüber hinaus weisen die Wälzlagerkäfige 4 auch Anlageflächen 5, an denen sich die Wälzlagerkäfige 4 jeweils an dem Innenring 1 abstützen.

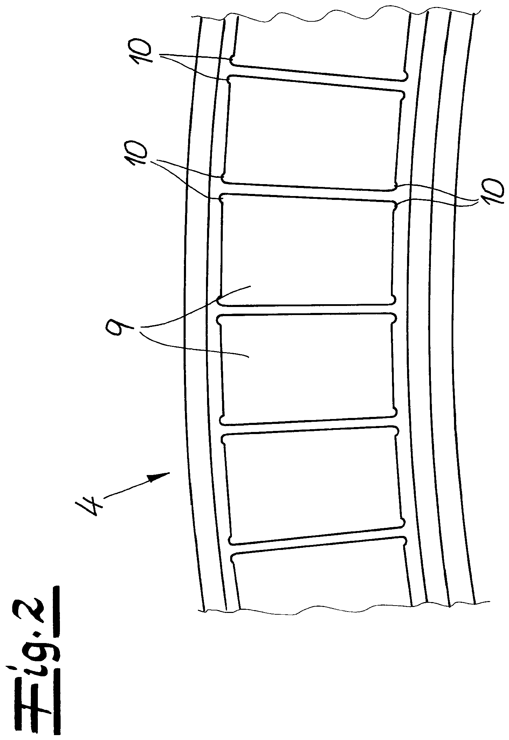

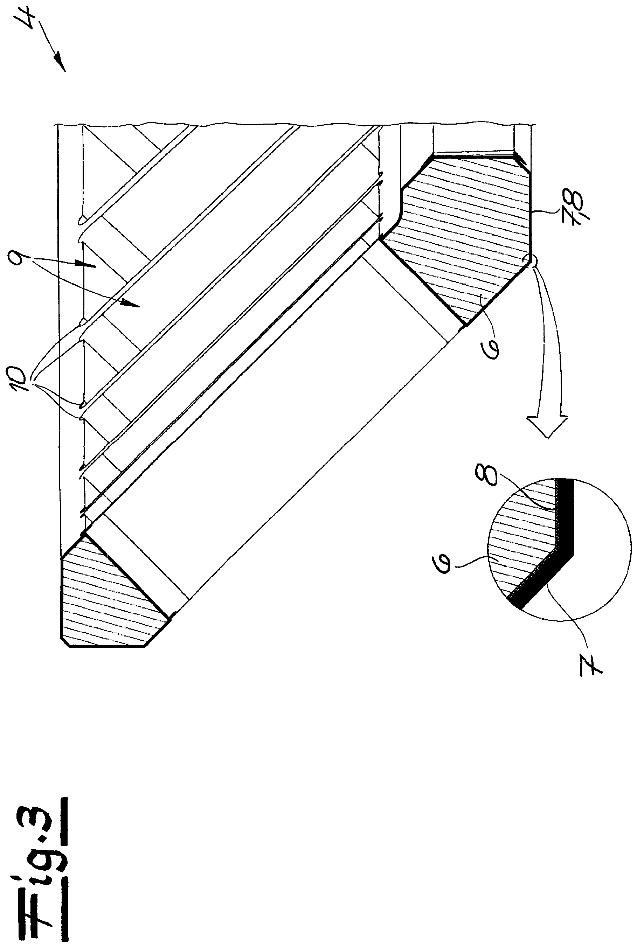

In den Fig. 2 und 3 ist dargestellt, dass die beiden Wälzlagerkäfige 4 jeweils einen stabilen Grundkörper 6 sowie eine außen liegende Beschichtung 7 aus thermoplastischem Kunststoff aufweisen. Zur Verbesserung der Haftung der Beschichtung 7 auf dem Grundkörper 6 ist des Weiteren eine dünne Haftvermittlerschicht 8 als Zwischenschicht vorgesehen.

Der stabile Grundkörper 6 ist aus einem metallischen Vollmaterial durch einen schneidenden, materialabtragenden Prozess gebildet und kann beispielsweise aus einem vollen Ring gefräst sein. Dabei ergibt sich der Vorteil, dass der Grundkörper 6 eine auch für einen Großwälzlager ausreichende Stabilität aufweist. Darüber hinaus können bei der Herstellung aus dem Vollmaterial auch weitere Konturen bedarfsgerecht erzeugt werden. So ist in der Fig. 2 zu erkennen, dass die Öffnungen 9 zur Aufnahme der Kegelrollen als Wälzkörper 3 eine im Wesentlichen trapezförmige Grundfläche aufweisen. In den Ecken der Öffnungen 9 sind jedoch über die Grundfläche hinausgehende Aussparungen 10 vorgesehen. In dem Ausführungsbeispiel werden in den Ecken der Öffnungen 9 zusätzliche Bohrungen gebildet, so dass diese Aussparungen 10 die Form von Kreissegmenten aufweisen.

Die Aussparungen 10 sind dazu vorgesehen, um an den Ecken ein Anhäufen der Beschichtung 7 zu vermeiden.

Die Beschichtung 7 wird vorzugsweise in einem Wirbelbett aufgebracht, wobei sich eine sehr gleichmäßige Beschichtung bildet. In den Ecken der Öffnungen 9 kann sich aber allein aufgrund der Geometrie eine Materialanhäufung bilden, die jedoch durch die zusätzlichen Aussparungen 10 nicht zu einem Verklemmen mit den Wälzkörpern 3 führen kann.

Während der Grundkörper 6 dem Wälzlagerkäfig 4 eine hohe Stabilität verleiht, bewirkt die Beschichtung 7 eine Reduzierung der Reibung sowie einen effektiven Schutz gegen Verschleiß. Als Beschichtung 7 sind insbesondere Polyamid (PA) und Polyetherketone, bevorzugt Polyetheretherketon (PEEK), mit einer Schichtdicke zwischen 0,4 mm und 1,3 mm geeignet.

Die Beschichtung des Grundkörpers 6 erfolgt vorzugsweise in einem Wirbelbett, wobei der Grundkörper 6 zunächst auf eine für die Beschichtung 7 geeignete Temperatur erwärmt wird, bei der dann nachfolgend im Wirbelbett Partikel eines Kunststoffpulvers anhaften, aufschmelzen und die durchgehende Beschichtung 7 bilden.

Der stabile Grundkörper 6 ist aus einem metallischen Vollmaterial durch einen schneidenden, materialabtragenden Prozess gebildet und kann beispielsweise aus einem vollen Ring gefräst sein. Dabei ergibt sich der Vorteil, dass der Grundkörper 6 eine auch für einen Großwälzlager ausreichende Stabilität aufweist. Darüber hinaus können bei der Herstellung aus dem Vollmaterial auch weitere Konturen bedarfsgerecht erzeugt werden. So ist in der Fig. 2 zu erkennen, dass die Öffnungen 9 zur Aufnahme der Kegelrollen als Wälzkörper 3 eine im Wesentlichen trapezförmige Grundfläche aufweisen. In den Ecken der Öffnungen 9 sind jedoch über die Grundfläche hinausgehende Aussparungen 10 vorgesehen. In dem Ausführungsbeispiel werden in den Ecken der Öffnungen 9 zusätzliche Bohrungen gebildet, so dass diese Aussparungen 10 die Form von Kreissegmenten aufweisen.

Die Aussparungen 10 sind dazu vorgesehen, um an den Ecken ein Anhäufen der Beschichtung 7 zu vermeiden.

Die Beschichtung 7 wird vorzugsweise in einem Wirbelbett aufgebracht, wobei sich eine sehr gleichmäßige Beschichtung bildet. In den Ecken der Öffnungen 9 kann sich aber allein aufgrund der Geometrie eine Materialanhäufung bilden, die jedoch durch die zusätzlichen Aussparungen 10 nicht zu einem Verklemmen mit den Wälzkörpern 3 führen kann.

Während der Grundkörper 6 dem Wälzlagerkäfig 4 eine hohe Stabilität verleiht, bewirkt die Beschichtung 7 eine Reduzierung der Reibung sowie einen effektiven Schutz gegen Verschleiß. Als Beschichtung 7 sind insbesondere Polyamid (PA) und Polyetherketone, bevorzugt Polyetheretherketon (PEEK), mit einer Schichtdicke zwischen 0,4 mm und 1,3 mm geeignet.

Die Beschichtung des Grundkörpers 6 erfolgt vorzugsweise in einem Wirbelbett, wobei der Grundkörper 6 zunächst auf eine für die Beschichtung 7 geeignete Temperatur erwärmt wird, bei der dann nachfolgend im Wirbelbett Partikel eines Kunststoffpulvers anhaften, aufschmelzen und die durchgehende Beschichtung 7 bilden.

## Patentansprüche

1. Verfahren zur Herstellung eines Wälzlagerkäfigs (4) für ein Wälzlager mit zumindest einer Reihe von Wälzkörpern (3), wobei ein Ring oder Ringsegmente aus einem metallischen Vollmaterial bereitgestellt wird bzw. werden, wobei durch einen Umformprozess und/oder einen schneidenden, materialabtragenden Prozess ein ringförmiger bzw. segmentierter Grundkörper (6) des Wälzlagerkäfigs (4) gebildet wird, der Öffnungen (9) für die Aufnahme jeweils eines Wälzkörpers (3) aufweist, **dadurch gekennzeichnet, dass** der Grundkörper (6) zum thermischen Beschichten mit einem thermoplastischen Kunststoffpulver auf eine Temperatur oberhalb einer minimalen Beschichtungstemperatur erwärmt wird, wobei der Grundkörper (6) nachfolgend in ein Wirbelbett mit dem thermoplastischen Kunststoffpulver getaucht wird, wobei während des Verweilens des Grundkörpers (6) in dem Wirbelbett Kunststoffpulver in dem Grundkörper (6) anhaftet, aufschmilzt und eine durchgehende Beschichtung (7) bildet und wobei der Grundkörper (6) nach der Beschichtung aus dem Wirbelbett entnommen wird, wobei zwischen dem Erwärmen des Grundkörpers (6) und dem Eintauchen in das Wirbelbett eine Pause zur Vergleichmäßigung der Temperatur des Grundkörpers (6) vorgesehen ist und wobei der Grundkörper (6) auch am Ende der Pause eine Temperatur oberhalb der minimalen Beschichtungstemperatur aufweist, wobei der Grundkörper (6) vor der Beschichtung mit einer Haftvermittlerschicht (8) als Grundierung versehen wird.

2. Verfahren nach Anspruch 1, wobei fensterartige Öffnungen (9) mit einer rechteckigen oder trapezförmigen Grundfläche zur Aufnahme von Rollen als Wälzkörpern (3) gebildet werden und wobei in den Ecken der Öffnungen (9) über die jeweilige Grundfläche hinausgehende Aussparungen (10) erzeugt werden.

3. Verfahren nach Anspruch 2, wobei die Aussparungen (10) die Form von Kreissegmenten aufweisen.

4. Verfahren nach einem der Ansprüche 1 bis 3, wobei der Grundkörper in einem Ofen erwärmt wird.

5. Verfahren nach einem der Ansprüche 1 bis 4, wobei der Grundkörper (6) während der Erwärmung und/oder der Beschichtung bewegt, insbesondere geschwenkt und/oder gedreht, wird.

6. Verfahren nach einem der Ansprüche 1 bis 5, wobei ein thermoplastisches Kunststoffpulver aus einem Polyamid (PA) oder einem Polyetherketon verwendet wird.

7. Verfahren nach einem der Ansprüche 1 bis 6, wobei die Beschichtung (7) mit einer Dicke zwischen 0,4 mm bis 1 ,3 mm gebildet wird.

8. Verfahren nach einem der Ansprüche 1 bis 7, wobei der Grundkörper (6) vor der Beschichtung mit einem Partikelstrahl bearbeitet wird.

## Claims

1. Method for producing a rolling bearing cage (4) for a rolling bearing having at least one row of rolling bodies (3), wherein a ring or ring segments composed of a metallic solid material is or are provided, wherein, by means of a deformation process and/or a cutting, material-removing process, a ringshaped or segmented main body (6) of the rolling bearing cage (4) is formed which has openings (9) for receiving in each case one rolling body (3), **characterized in that**, in order to be thermally coated with a thermoplastic powder, the main body (6) is heated to a temperature above a minimum coating temperature, wherein the main body (6) is subsequently immersed in a fluidized bed with the thermoplastic powder, wherein, while the main body (6) is present in the fluidized bed, plastic powder adheres in the main body (6), melts on and forms a continuous coating (7), and wherein the main body (6) is removed from the fluidized bed after the coating process wherein, between the heating of the main body (6) and the immersion in the fluidized bed, an interval is provided in order for the temperature of the main body (6) to homogenize, and wherein the main body (6) is at a temperature above the minimum coating temperature even at the end of the interval, wherein the main body (6) is provided with an adhesion-promoting layer (8) as primer before the coating process.

2. Method according to Claim 1, wherein window-like openings (9) with a rectangular or trapezoidal outline are formed for the purpose of receiving rollers as rolling bodies (3), and wherein cutouts (10) that extend beyond the respective outline are generated in the corners of the openings (9).

3. Method according to Claim 2, wherein the cutouts (10) have the shape of circular segments.

4. Method according to one of Claims 1 to 3, wherein the main body is heated in an oven.

5. Method according to one of Claims 1 to 4, wherein the main body (6) is moved, in particular pivoted and/or rotated, during the heating and/or coating process (es) .

6. Method according to one of Claims 1 to 5, wherein use is made of a thermoplastic powder composed of a polyamide (PA) or a polyether ketone.

7. Method according to one of Claims 1 to 6, wherein the coating (7) is formed with a thickness of between 0.4 mm and 1.3 mm.

8. Method according to one of Claims 1 to 7, wherein the main body (6) is treated using a particle jet before the coating process.

## Revendications

1. Procédé de fabrication d'une cage de palier à roulement (4) pour un palier à roulement avec au moins une rangée de corps de roulement (3), dans lequel on prépare une bague ou des segments de bague en un matériau métallique plein, dans lequel on forme un corps de base annulaire ou segmenté (6) de la cage de palier à roulement (4) par une opération de déformation et/ou une opération de coupe avec enlèvement de matière, qui présente des ouvertures (9) destinées à recevoir chacune un corps de roulement (3),
**caractérisé en ce que** l'on chauffe le corps de base (6) pour son revêtement à chaud avec une poudre de matière plastique thermoplastique à une température supérieure à une température de revêtement minimale, **en ce que** l'on plonge ensuite le corps de base (6) dans un lit fluidisé avec la poudre de matière plastique thermoplastique, dans lequel la poudre de matière plastique adhère au corps de base (6), fond et forme un revêtement continu (7) pendant le séjour du corps de base (6) dans le lit fluidisé, et dans lequel on retire le corps de base (6) hors du lit fluidisé après le revêtement, dans lequel il est prévu entre le chauffage du corps de base (6) et la plongée dans le lit fluidisé une pause permettant l'égalisation de la température du corps de base (6) et dans lequel le corps de base (6) présente aussi à la fin de la pause une température supérieure à la température de revêtement minimale, dans lequel on munit le corps de base (6) avant le revêtement d'une couche de promoteur d'adhérence (8) comme couche de fond.

2. Procédé selon la revendication 1, dans lequel on forme des ouvertures en forme de fenêtres (9) avec une face de base rectangulaire ou trapézoïdale pour loger des rouleaux en tant que corps de roulement (3) et dans lequel on produit dans les angles des ouvertures (9) des découpes (10) se prolongeant au-delà de la face de base respective.

3. Procédé selon la revendication 2, dans lequel les découpes (10) présentent la forme de segments de cercle.

4. Procédé selon l'une quelconque des revendications 1 à 3, dans lequel on chauffe le corps de base dans un four.

5. Procédé selon l'une quelconque des revendications 1 à 4, dans lequel on déplace, en particulier on fait pivoter et/ou tourner, le corps de base (6) pendant le chauffage et/ou le revêtement.

6. Procédé selon l'une quelconque des revendications 1 à 5, dans lequel on utilise une matière plastique thermoplastique en un polyamide (PA) ou un polyéthercétone.

7. Procédé selon l'une quelconque des revendications 1 à 6, dans lequel on forme le revêtement (7) avec une épaisseur comprise entre 0,4 mm et 1,3 mm.

8. Procédé selon l'une quelconque des revendications 1 à 7, dans lequel on usine le corps de base (6) avec un faisceau de particules avant le revêtement.
